Europäisches Patentamt

European Patent Office

Office européen des brevets

(19)

(11) **EP 1 119 098 A2**

(12) **EUROPÄISCHE PATENTANMELDUNG**

(43) Veröffentlichungstag:
**25.07.2001 Patentblatt 2001/30**

(51) Int Cl.[7]: **H02P 7/05**

(21) Anmeldenummer: **00128328.2**

(22) Anmeldetag: **22.12.2000**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **22.01.2000 DE 10002706**

(71) Anmelder: **ROBERT BOSCH GMBH**
**70442 Stuttgart (DE)**

(72) Erfinder: **Heese, Thomas**
**77815 Buehl (DE)**

(54) **Verfahren zur Steuerung der Umrichterschaltung einer geschalteten Reluktanzmaschine**

(57) Die Erfindung betrifft ein Verfahren zur Steuerung der Umrichterschaltung einer geschalteten Reluktanzmaschine, das eine Stromregelung mit Hysterese beinhaltet, mit welcher die Leistungsschalter mit einer Frequenz, die von der Breite des Hysteresebandes abhängt, getaktet betrieben werden. Die Breite der Hysterese ist in Abhängigkeit von der Geschwindigkeit oder der Last der Reluktanzmaschine veränderbar, insbesondere in der Weise, dass der Abstand zwischen maximalem und minimalem Schwellwert, bei welchem der Strom ab- bzw. zugeschaltet wird, mit sinkender Geschwindigkeit zunimmt und/oder mit steigender Last abnimmt. Die Veränderung der Breite der Hysterese kann im ersten Ansatz linear mit der Geschwindigkeit oder der Last bzw. dem Strom veränderbar sein, insbesondere in der Weise, dass die Taktfrequenz, mit welcher die Leistungsschalter getaktet betrieben werden, im wesentlichen konstant ist. Ein wesentliches weiteres Merkmal besteht in einer gezielten Veränderung der Breite der Hysterese, um die Taktfrequenz gezielt zu verändern, dann wenn bei einer Geschwindigkeit der Reluktanzmaschine, bei welcher die konstante Taktfrequenz im Bereich geräuschkritischer Resonanzfrequenzen liegt, um diese gezielt zu vermeiden. Dabei wird die Taktfrequenz beispielsweise von einem hohen konstanten auf einen niedrigeren konstanten Wert verringert, wobei dabei die Breite der Hysterese erhöht wird.

FIG. 1

EP 1 119 098 A2

**Beschreibung**

Stand der Technik

Die Erfindung geht aus von einem Verfahren zur Steuerung der Umrichterschaltung einer Reluktanzmaschine, das eine Stromregelung mit Hysterese beinhaltet, mit welcher die Leistungsschalter mit einer Frequenz, die von der Breite des Hysteresebandes abhängt, getaktet werden, der im Oberbegriff des Anspruchs 1 definierten Gattung.

Aus dem Buch "Switched Reluctance Motors and Their Control" von T.J.E. Miller, MAGNA PHYSICS PUBLISHING AND CLARENDON PRESS, OXFORD, 1993, sind im Kapitel 4 Dynamic Operation, Seite 53 - 61 verschiedene Verfahren zur Steuerung der Umrichterschaltung für geschaltete Reluktanzmotoren beschrieben. In der Regel werden Umrichter eingesetzt, die für jede Phase der Maschine einen Schalter zur Stromzuführung und einen Kommutierungsschalter sowie zwei den Schaltern zugeordnete Freilaufdioden vorsehen. Als Schalter werden üblicherweise Transistoren eingesetzt. Eine solche Schaltung zeigt z.B. die Figur 4.1 auf Seite 53 des genannten Buchs. Diese Schaltung kann sowohl in der harten als auch der weichen Unterbrechungsart betrieben werden. Bei der harten Unterbrechungsart werden sowohl der Leistungsschalter als auch der Kommutierungsschalter einer Phase während deren Stromleitphase gleichzeitig getaktet ein- und ausgeschaltet. Bei der weichen Unterbrechungsart wird nur der Leistungsschalter während der Stromleitphase getaktet ein- und ausgeschaltet während der Kommutierungsschalter dieser Phase über die gesamte Stromleitphase eingeschaltet ist. Diese weiche Unterbrechungsart (soft chopping) wird bei Motorbetrieb einer geschalteten Reluktanzmaschine deshalb bevorzugt, weil sie weniger Geräusche und elektromagnetische Verschmutzung verursacht. Bei der aus dieser Literaturstelle bekannten, auf Seite 62 angesprochenen Hysterese-Stromregelung wird der Strom so geregelt, dass sein an die Phase abgegebener Wert zwischen einem Maximal- und einem Minimalwert bleibt, wozu der versorgende Leistungsschalter entsprechend getaktet ein- und ausgeschaltet wird. Bei steigender Induktivität und steigender Flussverkettung in der Phase nimmt die Taktfrequenz, mit welcher der Versorgungsstrom der zugehörigen Phase ein- und ausgeschaltet wird, ab. Die Taktfrequenz ist also variabel entsprechend dem vorgegebenen Hystereseband. Dies kann zu unangenehmen und gegebenenfalls schädlichen Geräuschproblemen führen.

Aus der EP 0 848 491 A2 ist ein Verfahren und eine Schaltungsanordnung zum Betreiben einer geschalteten Reluktanzmaschine bekannt, bei welcher eine Hysterese-Stromregelung mit anpassbarem Hystereseband vorgesehen ist. Die Leistungsschalter werden getaktet betrieben, wobei die Taktung konstant gehalten wird und die Breite des Hysteresebandes so vorgegeben und verändert wird, dass bei jeder vorkommenden Strombelastung und Stromanforderung die Taktfrequenz konstant gehalten wird. Dazu wird die Taktfrequenz überwacht und ein Frequenzfehlersignal erzeugt, welches zur Veränderung der Breite des Hysteresebandes in der Weise dient, dass die Taktfrequenz im wesentlichen konstant gehalten wird. Durch dieses System können zwar Geräuschprobleme weitgehend gemindert werden, da keine niedrigen Frequenzen auftreten, es muss allerdings die Taktfrequenz gemessen werden, was in der Praxis schwierig und aufwendig ist. Darüber hinaus ist dieses System als echte Regelung mit der Frequenz als rückgekoppeltem Signal aufgebaut. Weiterhin kann es aufgrund der konstanten Taktfrequenz gelegentlich doch zu Geräuschproblemen kommen.

Aufgabe vorliegender Erfindung ist die Bereitstellung einer einfacheren und kostengünstigeren Lösung, die darüber hinaus auch nach einem anderen Lösungsansatz und nach anderem Prinzip arbeitet. Auf einfache und kostengünstige Weise sollen Geräuschprobleme bei gesteuerten Reluktanzmaschinen nachhaltig vermieden werden.

Vorteile der Erfindung

Das erfindungsgemäße Verfahren zur Steuerung der Umrichterschaltung einer geschaltete Reluktanzmaschine mit den kennzeichnenden Merkmalen des Anspruchs 1 hat gegenüber dem bekannten Stand der Technik den Vorteil, eine demgegenüber wesentlich vereinfachte indirekte Regelung bzw. Steuerung der Breite des Hysteresebandes zur Verfügung zu stellen. Die Breite des Hysteresebandes wird dabei in Abhängigkeit von den Größen Geschwindigkeit, Phasenstrom und Rotorposition geändert. Diese Größen werden zur Regelung des Antriebes sowieso benötigt und sind somit bereits vorhanden. Daraus ergibt sich der wesentliche Vorteil, dass kein zusätzliches Signal benötigt wird und damit der notwendige Aufwand und die Kosten geringer sind.

Bei dem Verfahren zur Steuerung der Umrichterschaltung gemäß der Erfindung ist dazu prinzipiell die Breite der Hysterese in Abhängigkeit von der Geschwindigkeit der Reluktanzmaschine veränderbar, insbesondere in der Weise, dass der Abstand zwischen maximalem und minimalen Schwellwert, bei welchem der Strom ab- bzw. zugeschaltet wird, mit sinkender Geschwindigkeit zunimmt und/oder mit steigender Last abnimmt.

Durch die in den weiteren Ansprüchen niedergelegten Maßnahmen sind vorteilhafte Weiterbildungen und Verbesserungen des im Anspruch 1 angegebenen Verfahrens möglich.

Entsprechend einer besonders vorteilhaften Weiterbildung des erfindungsgemäßen Verfahrens ist vorgesehen, dass die Veränderung der Breite der Hysterese im ersten Ansatz linear mit der Geschwindigkeit oder der Last bzw. des Stromes veränderbar ist, insbesondere in der Weise, dass die Taktfrequenz, mit welcher die Leistungsschalter getaktet betrieben werden, im Wesentlichen konstant ist.

Entsprechend einer weiteren sehr vorteilhaften Ausgestaltung des erfindungsgemäßen Verfahrens, die besonders vorteilhaft zur Vermeidung geräuschkritischer Resonanzen ist, ist vorgesehen, dass bei einer Geschwindigkeit der Reluktanzmaschine, bei welcher die konstante Taktfrequenz im Bereich geräuschkritischer Resonanzfrequenzen liegt, eine gezielte Veränderung der Breite der Hysterese vorgenommen wird, um die Taktfrequenz gezielt zu verändern. Auf diese Weise lassen sich bei bekannten geräuschkritischen Resonanzen, diese auf elegante Weise umgehen, indem eine gezielte Veränderung der Taktfrequenz durch die entsprechende Veränderung der Breite der Hysterese vorgenommen wird. Eine besondere Ausgestaltung dieser vorteilhaften Ausführungsform sieht vor, dass die Taktfrequenz von einem hohen konstanten auf einen niedrigeren konstanten Wert verringert wird, wobei dabei die Breite der Hysterese erhöht wird. Möglich ist dies auch umgekehrt in der Weise, dass von einem niedrigeren auf einen höheren konstanten Wert der Taktfrequenz erhöht wird, wobei dabei die Breite der Hysterese verringert wird.

In weiteren vorteilhaften Ausgestaltungen des erfindungsgemäßen Verfahrens ist zum einen vorgesehen, dass die gesteuerte Reluktanzmaschine als Motor betrieben wird, und zum anderen, dass als Leistungsschalter Transistoren verwendet werden.

Entsprechend einer zusätzlichen vorteilhaften Ausgestaltung der Erfindung kann bei dem Verfahren das gesamte Hystereseband unter Beibehaltung seiner Breite um einen bestimmten Betrag angehoben oder abgesenkt werden.

Gemäß weiterer Ausgestaltung des erfindungsgemäßen Verfahrens, welches die Veränderung der Induktivität über der Rotorposition berücksichtigt, wird die Breite des Hysteresebandes in Abhängigkeit von der Rotorposition innerhalb einer Umdrehung der Reluktanzmaschine verändert, insbesondere periodisch.

Zeichnung

Die Erfindung ist anhand eines in der Zeichnung dargestellten Ausführungsbeispieles in der nachfolgenden Beschreibung näher erläutert. Dabei zeigt

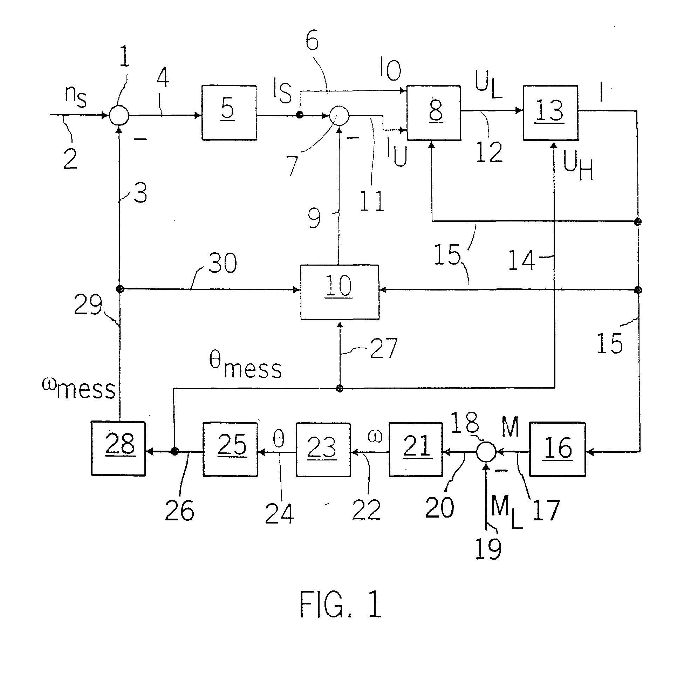

Fig. 1    ein Blockschaltbild der Regelung gemäß dem erfindungsgemäßen Verfahren am Beispiel einer Drehzahlregelung.

Beschreibung des Ausführungsbeispieles

Bevor auf das Ausführungsbeispiel entsprechend Fig. 1 näher eingegangen wird, soll zunächst generell auf die Regelung geschalteter Reluktanzmaschinen eingegangen werden. Diese werden in der Regel spannungs- oder stromgeregelt. Bei der Spannungsregelung erfolgt das Reduzieren der mittleren Spannung über der Phase durch Takten von Transistoren, die als Leistungsschalter eingesetzt werden. Das Takten erfolgt mit einer festen Frequenz und variablem Tastverhältnis.

Bei der Stromregelung wird der Phasenstrom zwischen zwei festen Schwellwerten geregelt. Bei Überschreiten der oberen Schwelle wird der als Leistungsschalter verwendete Transistor ausgeschaltet und bei Unterschreiten der unteren Schwelle wieder eingeschaltet. Auf diese Weise kann der Phasenstrom innerhalb einer Hysterese, deren Bandbreite sich aus der Differenz der beiden Schwellwerte ergibt, konstant gehalten werden. Die Taktfrequenz der Leistungstransistoren stellt sich variabel in Abhängigkeit von der Geschwindigkeit, der Rotorposition und der Breite des Hysteresebandes sowie der absoluten Höhe der Schwellwerte ein. Bisher wurde üblicherweise die Breite der Hysterese konstant eingestellt. Davon abweichend wird entsprechend der eingangs genannten EP 0 848 491 die Taktfrequenz konstant eingestellt und es ändert sich die Breite des Hysteresebandes dementsprechend.

Die Problematik liegt allgemein darin, dass die maximal mögliche Taktfrequenz durch die Bauteile und die Schaltverluste begrenzt ist. Aufgrund dieser Tatsache wird die Breite der Hysterese für die Stromregelung so eingestellt, dass bei kleiner Geschwindigkeit des Motors, wenn die Reluktanzmaschine als Motor betrieben wird, die maximale Taktfrequenz nicht überschritten wird. Wird die Breite der Hysterese über den gesamten Geschwindigkeitsbereich konstant gehalten, dann sinkt die Taktfrequenz für höhere Drehzahlen stark ab. Dabei ist es sogar möglich, dass die Taktfrequenz bis in hörbare Bereiche absinkt. Die variable Taktfrequenz kann auch zusätzlich in Bereiche geräuschkritischer Resonanzfrequenzen eintreten, so dass sich das Geräuschverhalten der Reluktanzmaschine deutlich verschlechtert.

Entsprechend vorliegender Erfindung wird hier Abhilfe dadurch geschaffen, dass die Breite der Hysterese bzw. des Hysteresebandes in Abhängigkeit von der Geschwindigkeit der Reluktanzmaschine geändert wird. Dies erfolgt insbesondere in der Weise, dass der Abstand zwischen maximalem und minimalem Schwellwert, bei welchem der Strom ab- bzw. zugeschaltet wird, mit sinkender Geschwindigkeit zunimmt und mit steigender Last abnimmt. Durch den Abstand zwischen maximalem und minimalem Schwellwert, bei welchem der Strom ab- bzw. zugeschaltet wird, wird die Breite der Hysterese bzw. des Hysteresebandes bestimmt.

Gemäß der Erfindung kann die Veränderung der Breite der Hysterese im ersten Ansatz linear mit der Geschwindigkeit verändert werden.

Anstelle der geschwindigkeitsabhängigen Veränderung kann auch eine Veränderung in Abhängigkeit von der Last beziehungsweise vom Strom erfolgen.

Dies geschieht vorteilhafterweise so, dass die Taktfrequenz, mit welcher die Leistungsschalter getaktet betrieben werden, im wesentlichen konstant ist. Sollte eine solche konstante Taktfrequenz bei bestimmten Anwendungen, wie beispielsweise einer bestimmten Geschwindigkeit, der mit der Steuerung betriebenen Reluktanzmaschine im Bereich geräuschkritischer Resonanzfrequenzen liegen, dann sieht eine besondere Ausführungsform des erfindungsgemäßen Verfahrens eine gezielte Veränderung der Breite der Hysterese vor, um die Taktfrequenz gezielt zu verändern. Bevorzugt wird dabei die Taktfrequenz von einem hohen konstanten auf einen niedrigeren konstanten Wert verringert, wobei dadurch die Breite der Hysterese erhöht wird. Auch eine weitere Erhöhung ist denkbar, ebenso wie die gezielte Veränderung in umgekehrter Weise.

Die geschaltete Reluktanzmaschine wird bevorzugt als Motor betrieben und als Leistungsschalter sind Transistoren vorgesehen. Möglich ist es auch, das gesamte Hystereseband unter Beibehaltung seiner Breite um einen bestimmten Betrag anzuheben oder abzusenken. Da sich bei der geschalteten Reluktanzmaschine die Induktivität mit der Rotorposition bei einer Umdrehung in periodischer Weise verändert, kann zur Konstanthaltung der Taktfrequenz über der Rotorposition die Breite des Hysteresebandes in Abhängigkeit von der Rotorposition innerhalb einer Umdrehung der Reluktanzmaschine verändert werden, und zwar insbesondere periodisch.

In der Fig. 1 ist ein Blockschaltbild der Regelung gemäß dem erfindungsgemäßen Verfahren am Beispiel einer Drehzahlregelung in der regelungstechnischen Art dargestellt. Grundsätzlich sind auch Positions- oder Drehmomentregelungen möglich.

Bei der Drehzahlregelung wird an einem ersten Summationspunkt 1 eine Solldrehzahl $n_S$ auf Leitung 2 mit positivem Vorzeichen und auf Leitung 3 eine gemessene Drehzahl $\omega_m$ mit negativem Vorzeichen eingegeben. Die Differenz wird auf Leitung 4 einem Drehzahlregler 5 zugeführt. Der Drehzahlregler 5 setzt diese Vorgabe in einen Stromsollwert $I_S$ um, welcher zum Beispiel mit dem oberen Stromsollwert $I_O$ des Hysteresebandes übereinstimmen kann. Dieser wird auf einer Leitung 6 sowohl einem zweiten Summationspunkt 7 als auch einem Stromregler 8 als, wie im Beispiel dargestellt, oberer Stromsollwert $I_O$ als ein Eingangssignal zugeführt. Dem zweiten Summationspunkt 7 wird auf einer Leitung 9 mit negativem Vorzeichen ein Ausgangssignal eines Hysteresereglers 10 zugeführt, welches einen Stromkorrekturwert darstellt. Durch Addition des Stromsollwertes $I_S$ und dieses Stromkorrekturwertes wird ein Differenzsignal erzeugt, welches als unterer Stromsollwert $I_U$ auf einer Leitung 11 dem Stromregler 8 als zweites Eingangssignal zugeführt wird. Der Stromregler 8 erzeugt als Ausgangssignal auf einer Leitung 12 eine Spannung $U_L$, die als Eingangssignal einem Umrichter 13 zugeführt wird. Dem Umrichter 13 wird auf einer zweiten Eingangsleitung 14 eine Spannung $U_H$ zugeführt. Das Ausgangssignal des Umrichters 13 ist auf einer Leitung 15 der Strom I, welcher einer geschalteten Reluktanzmaschine in Form eines Reluktanzmotors 16, zugeführt wird. Das Stromsignal I auf Leitung 15 wird als Eingangssignal auch dem Stromregler 8 und dem Hystereseregler 10 in Rückkopplung zugeführt.

Der Reluktanzmotor 16 erzeugt ein Moment M, welches als Eingangssignal auf einer Leitung 17 einem dritten Summationspunkt 18 zugeführt wird. Mit negativem Vorzeichen wird auf einer Leitung 19 das der vom Motor 16 angetriebenen Last entsprechende Lastmomentensignal $M_L$ dem dritten Summationspunkt 18 zugeführt. Das Differenzsignal wird auf Leitung 20 einer Wandlerschaltung zugeführt. Diese erzeugt in einer Laplace-Transformation nach der Formel

$$\frac{1}{s\left(J_L + J_M\right)} \quad,$$

wobei $J_L$ das Trägheitsmoment der Last und $J_M$ das Trägheitsmoment des Motors bedeuten, die Winkelgeschwindigkeit $\omega$ des Motors 16. Diese Winkelgeschwindigkeit $\omega$ wird auf Leitung 22 einer weiteren Wandlerschaltung 23 zugeführt, welche in einer Laplace-Transformation nach der Formel 1/s den Positionswinkel $\theta$ ermittelt und als Ausgangssignal auf einer Leitung 24 einer Positionsmessschaltung 25 zuführt. Die Positionsmessschaltung 25 stellt auf einer Leitung 26 den aktuellen, gemessenen Wert der Rotorposition des Motors 16 als Signal $\theta_{mess}$ zur Verfügung.

Dieses Rotorpositionssignal $\theta_{mess}$ entspricht dem Signal $U_H$ auf Leitung 14, welches dem Umrichter 13 als ein Eingangssignal zugeführt wird. Mittels dieses Signals wird vom Umrichter die Kommutierung der Phasenschalter gesteuert, während mittels des Signals $U_L$ auf Leitung 12 die den einzelnen Phasen zugeordneten Versorgungsschalter getaktet eingeschaltet werden. Das auf Leitung 26 anstehende Signal $\theta_{mess}$, welche den aktuellen, gemessenen Wert der Rotorposition des Motors 16 angibt, wird über die gestrichelt dargestellte Leitung 27 als Eingangssignal dem Hystereseregler 10 zur Verfügung gestellt, damit dieser die Breite des Hysteresebandes in Abhängigkeit von der Rotorposition innerhalb einer Umdrehung des Rotors ändern kann in der Weise, dass die Taktfrequenz in jeder Rotorposition möglichst konstant bleibt.

Das Rotorpositionssignal $\theta_{mess}$ auf Leitung 26 bildet das Eingangssignal einer Differenzierschaltung 28, die aus der zeitlichen Ableitung d/dt des Rotorpositionssignals $\theta_{mess}$ auf einer Ausgangsleitung 29 die gemessene Winkelgeschwindigkeit $\omega_{mess}$ zur Verfügung stellt. Dieses Signal der gemessenen Winkelgeschwindigkeit $\omega_{mess}$ wird auf einer Leitung 30 dem Hystereseregler als tatsächliches Geschwindigkeitssignal des Motors 16 zugeführt und auf der bereits erwähnten Leitung 3 dem ersten Summationspunkt 7 mit negativem Vorzeichen als Vergleichswert zur auf Leitung 2 vorgegebenen Solldrehzahl $n_S$.

Wie vorstehen anhand der Figur 1 dargestellt, werden die zur Regelung des Antriebs des Reluktanzmotors 16 notwendigen und vorhandenen Signale der Größen Geschwindigkeit, in Form des Signals Winkelgeschwindigkeit $\omega_{mess}$ auf Leitung 29, 3, 30, Phasenstrom, in Form des Signals I auf Leitung 15, und Rotorposition, in Form des Rotorpositionssignals $\theta_{mess}$ auf Leitung 26, 14, 27. Dies zeigt den besonderen Vorteil der Erfindung, nur bereits vorhandene Signale für das erfindungsgemäße Verfahren zur indirekten Regelung beziehungsweise Steuerung der Breite des Hysteresebandes zu verwenden, um damit die Taktfrequenz des Umrichters 13 konstant zu halten. Dieses Konstanthalten kann dann auch nach gezielter Änderung, beispielsweise Erhöhung, der Breite des Hysteresebandes fortgesetzt werden, wobei dann die Taktfrequenz, mit der die Versorgungs-Leistungsschalter getaktet werden, von einem hohen auf einen niedrigeren Wert verringert wird. Ein entsprechende Arbeitsweise ist auch in umgekehrter Weise möglich.

In vorteilhafter Weise stellt die vorliegende Erfindung ein kostengünstiges Verfahren zur Verfügung, mit welchem auf einfache Weise die Taktfrequenz durch Änderung der Breite des Hysteresebandes im wesentlichen konstant gehalten werden kann und mit welchem darüber hinaus bei besonders geräuschkritischen Situationen die Taktfrequenz von einem konstanten Wert auf einen anderen konstanten Wert durch gezielte Veränderung der Breite des Hysteresebandes verändert werden kann, um Geräuschprobleme zu vermeiden.

**Patentansprüche**

1. Verfahren zur Steuerung der Umrichterschaltung einer geschalteten Reluktanzmaschine, das eine Stromregelung mit Hysterese beinhaltet, mit welcher die Leistungsschalter mit einer Frequenz, die von der Breite des Hysteresebandes abhängt, getaktet betrieben werden,
dadurch gekennzeichnet, dass
die Breite der Hysterese in Abhängigkeit von der Geschwindigkeit der Reluktanzmaschine veränderbar ist, insbesondere in der Weise, dass der Abstand zwischen maximalem und minimalem Schwellwert, bei welchem der Strom ab- bzw. zugeschaltet wird, mit sinkender Geschwindigkeit zunimmt und/oder mit steigender Last abnimmt.

2. Verfahren nach Anspruch 1, dadurch gekennzeichnet, dass die Veränderung der Breite der Hysterese im ersten Ansatz linear mit der Geschwindigkeit oder mit der Last bzw. dem Strom veränderbar ist, insbesondere in der Weise, dass die Taktfrequenz, mit welcher die Leistungsschalter getaktet betrieben werden, im wesentlichen konstant ist.

3. Verfahren nach Anspruch 1 oder 2, dadurch gekennzeichnet, dass bei einer Geschwindigkeit der Reluktanzmaschine, bei welcher die konstante Taktfrequenz im Bereich geräuschkritischer Resonanzfrequenzen liegt, eine gezielte Veränderung der Breite der Hysterese vorgenommen wird, um die Taktfrequenz gezielt zu verändern.

4. Verfahren nach Anspruch 3, dadurch gekennzeichnet, dass die Taktfrequenz von einem hohen konstanten auf einen niedrigeren konstanten Wert verringert wird, wobei dabei die Breite der Hysterese erhöht wird, oder dass die Taktfrequenz von einem niedrigeren auf einen höheren konstanten Wert erhöht wird, wobei dabei die Breite der Hysterese verringert wird.

5. Verfahren nach einem der vorigen Ansprüche, dadurch gekennzeichnet, dass die gesteuerte Reluktanzmaschine als Motor betrieben wird.

6. Verfahren nach einem der vorigen Ansprüche, dadurch gekennzeichnet, dass als Leistungsschalter Transistoren vorgesehen sind.

7. Verfahren nach einem der vorigen Ansprüche, dadurch gekennzeichnet, dass das gesamte Hystereseband unter Beibehaltung seiner Breite um einen bestimmten Betrag angehoben oder abgesenkt werden kann.

8. Verfahren nach einem der vorigen Ansprüche, dadurch gekennzeichnet, dass die Breite des Hysteresebandes in Abhängigkeit von der Rotorposition innerhalb einer Umdrehung der Reluktanzmaschine verändert wird, insbesondere periodisch.

FIG. 1